# EUROPEAN PATENT APPLICATION

(11) **EP 4 471 686 A1**
(43) Date of publication of application: **04.12.2024**
(21) Application number: 22923828.2
(22) Date of filing: 27.01.2022
(51) Int. Cl.: G06Q 10/06

(54) **WAREHOUSE WORK MANAGEMENT SYSTEM, WAREHOUSE WORK MANAGEMENT METHOD, AND PROGRAM**

(71) Applicant: LOGISTEED, Ltd., Tokyo 104-0031 (JP)
(72) Inventor: NAKAYASU Ryoji, Tokyo 104-8350 (JP); TATEUCHI Tadashi, Tokyo 104-8350 (JP); FUJIWARA Koki, Tokyo 104-8350 (JP); KOMUTA Osamu, Tokyo 104-8350 (JP); ISHIYAMA Kei, Tokyo 104-8350 (JP); ITOTANI Masahiro, Tokyo 104-8350 (JP); MORIO Naoya, Tokyo 104-8350 (JP); YAMAMOTO Yohei, Tokyo 104-8350 (JP)
(74) Representative: Isern Patentes y Marcas S.L.
(86) International application number: PCT/JP2022/003108
(87) International publication number: WO 2023/144963

(57) **Abstract**

[Problem] To enable to quickly correct a delay in progress caused by a trouble during a warehouse operation. [Solution] The warehouse work management system that manages a work volume based on a worker and a shipping order in each process in a warehouse operation acquires completion information of each work process throughout a warehouse; compares the acquired completion information with a work process in a previously generated work plan and calculates a progress status of the work process; notifies an alert if the progress status of the work process is a threshold or less based on the calculation result; generates a recovery plan in which a worker and/or a work content are/is changed, each time the alert is notified; and simulates the generated recovery plan and calculates the work efficiency of the entire work on the day based on the recovery plan.

## Description

### TECHNICAL FIELD

The present disclosure relates to a technology effective for the real-time optimization of warehouse work.

### BACKGROUND

Conventionally, a system for optimizing warehouse work have been proposed. For example, Patent Document 1 discloses a work planning system that can generate and optimize an overall work plan corresponding to multiple shipping orders, including the assignment of resources.

### DOCUMENT IN THE EXISTING ART

### Patent Document

Patent Document 1: JP2011-33873 A

### SUMMARY

### The technical problem solved by the disclosure

However, after a work plan for warehouse work is made, on the day when a warehouse worker is unable to come to work due to illness or other reasons, the warehouse workers have to be changed or when an urgent shipping order may arise, the work volume has to be changed. This may cause the scheduled work plan for a warehouse work to fall apart on the day.

In such cases, the initial work plan is required to be changed to accommodate the shipping orders, but it is desirable that the work efficiency of the warehouse work on the day does not significantly deviate from the initial work plan.

Therefore, the inventors focused on a system that simulates and provides how to change the work plan to maximize the work efficiency of a warehouse operation on the day by understanding the progress status of warehouse work in real-time during a warehouse is in operation.

An objective of the present disclosure is to provide a warehouse work management system, and a warehouse work management method and program that enable quick correction of a delay in progress caused by a trouble during a warehouse operation.

### Solution for solving the technical problem

The present disclosure provides a warehouse work management system that manages a work volume based on a worker and a shipping order in each process in a warehouse operation, including:
an acquisition unit that acquires completion information of each work process throughout a warehouse;
a calculation unit that compares the acquired completion information with a work process in a previously generated work plan and calculates a progress status of the work process;
an alert notification unit that notifies an alert if the progress status of the work process is a threshold or less based on the calculation result;
a generation unit that generates a recovery plan in which a worker and/or a work content are/is changed, each time the alert is notified; and
a simulator that simulates the generated recovery plan and calculates the work efficiency of the entire work on the day based on the recovery plan.

According to the present disclosure, the warehouse work management system that manages a work volume based on a worker and a shipping order in each process in a warehouse operation acquires completion information of each work process throughout a warehouse; compares the acquired completion information with a work process in a previously generated work plan and calculates a progress status of the work process; notifies an alert if the progress status of the work process is a threshold or less based on the calculation result; generates a recovery plan in which a worker and/or a work content each time the alert is notified; and simulates the generated recovery plan and calculates the work efficiency of the entire work on the day based on the recovery plan.

The present disclosure falls under the category of a system but also achieves similar functions and effects as a method and a program.

### Technical effect

The present disclosure enables to quickly correct a delay in progress caused by a trouble during a warehouse operation.

### BRIEF DESCRIPTION OF THE DRAWINGS

FIG. 1 is a diagram explaining the overview of the warehouse work management system 1.
FIG. 2 is a diagram showing the functional configuration of the warehouse work management system 1.
FIG. 3 is a diagram showing the flowchart of the shipping order acquisition process executed by the warehouse work management system 1.
FIG. 4 is a diagram showing the flowchart of the work plan acquisition process executed by the warehouse work management system 1.
FIG. 5 is a diagram showing the flowchart of the insufficient worker notification process executed by the warehouse work management system 1.
FIG. 6 is a diagram showing the flowchart of the alert notification process executed by the warehouse work management system 1.
FIG. 7 is a diagram schematically showing an example calculation result 60.
FIG. 8 is a diagram schematically showing an example alert 70 notified to the administrator terminal 40.
FIG. 9 is a diagram showing the flowchart of the recovery plan generation process executed by the warehouse work management system 1.
FIG. 10 is a diagram schematically showing an example change input UI 80 displayed by the administrator terminal 40.
FIG. 11 is a diagram schematically showing an example change input UI 86 displayed by the administrator terminal 40.
FIG. 12 is a diagram showing the flowchart of the work plan determination process executed by the warehouse work management system 1.
FIG. 13 is a diagram schematically showing an example simulation result.
FIG. 14 is a diagram schematically showing an example sorted simulation result.
FIG. 15 is a diagram schematically showing an example sorted simulation result.
FIG. 16 is a diagram schematically showing an example simulation result 90 output to the administrator terminal 40.
FIG. 17 is a diagram schematically showing an example simulation result 90 output to the administrator terminal 40.
FIG. 18 is a diagram schematically showing an example simulation result 90 output to the administrator terminal 40.
FIG. 19 is a diagram schematically showing an example simulation result 90 output to the administrator terminal 40.
FIG. 20 is a diagram showing the flowchart of the accelerable work notification process executed by the warehouse work management system 1.

### DETAILED DESCRIPTION OF THE EMBODIMENTS

Hereinafter, embodiments to carry out the present disclosure (hereinafter referred to as "Embodiments") are described below in detail with reference to the attached drawings. In the drawings, the same components throughout the description of Embodiments are designated by the same reference numerals.

### Basic concept / Basic configuration

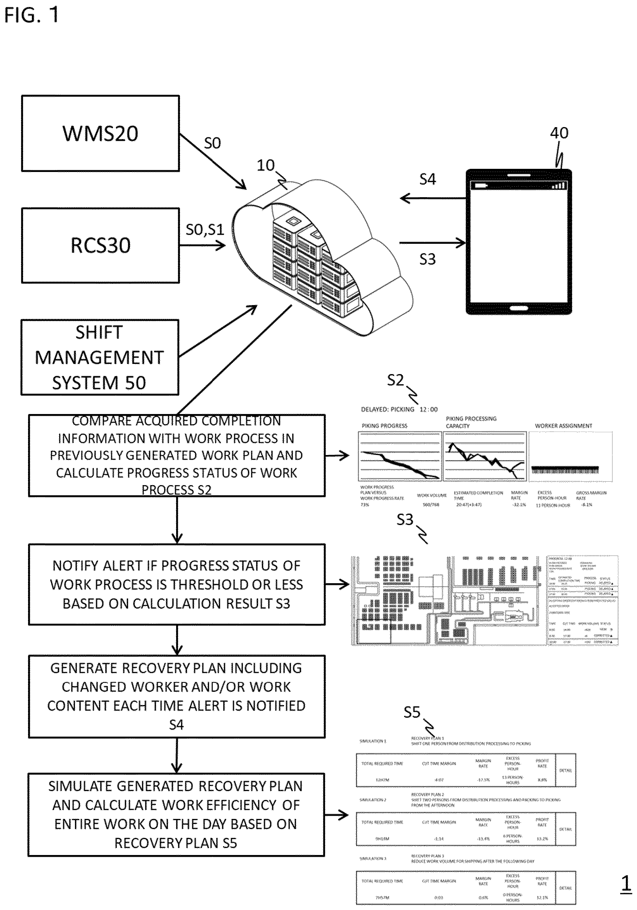

FIG. 1 is a diagram explaining the overview of the warehouse work management system 1. The warehouse work management system 1 is a system that manages the work volume based on a worker and a shipping order in each process of a warehouse operation, which includes at least a computer 10.

In this embodiment, the warehouse work management system 1 is a system, in which a computer 10 is data-communicatively connected with a WMS (Warehouse Management System ) 20 that manages shipping orders, an RCS (Resource Control System ) 30 that manages work plans, an administrator terminal 40 that is carried by an administrator who manages warehouse workers and work contents, and a shift management system 50 that is an attendance management system that manages attendance, working hours, late arrival, early leaving, breaks, and absence for each warehouse worker by using shift data, etc.

This embodiment assumes to use a work plan on the day which has been previously generated or stored. The work plan is desirably generated automatically by RCS 30 and automatically output to the computer 10 but not limited to this manner. Additionally, the process in a warehouse work is assumed to include receiving, binning, picking, distribution processing, packing, and shipping but not limited to these. The term "profit" herein includes not only simple gross profit but also sales amount, spending, balance, and profit rate.

The overview of the processing steps when the warehouse work management system 1 calculates the work efficiency of the entire work on the day based on change of a worker and/or a work content is explained below with reference to FIG 1.

The computer 10 acquires a shipping order and a work plan on the day (Step S0).

For example, the shipping order is data including a product ID, a shipping volume, and a deadline date and time. For example, the work plan is the number of warehouse workers and their work contents (e.g., working hours, work volume) for each process in warehouse work.

WMS 20 receives input of a shipping order from an administrator through the administrator terminal 40. WMS 20 transmits a shipping order on the day among the received shipping orders to the computer 10. WMS 20 can be configured to transmit a shipping order acquired from a customer system managed by a customer to the computer 10.

RCS 30 transmits a work plan on the day among the generated or stored work plans to the computer 10.

The computer 10 acquires a shipping order and a work plan on the day by receiving these shipping order and work plan from WMS 20 or RCS 30.

The computer 10 acquires completion information of each work process throughout a warehouse (Step S1).

The computer 10 acquires completion information for each work process throughout a warehouse that has been completed in real-time.

RCS 30 sends the completion information for each work process throughout a warehouse to the computer 10. The computer 10 acquires the completion information by receiving the completion information.

The computer 10 compares the acquired completion information with a work process in a previously generated work plan and calculates a progress status of the work process (Step S2). Examples of the progress status includes an impact on the work plan (progress rate against a work plan, completed work volume, and required work volume in a work plan), a profit difference due to a progress status (impact on balance), and a person-hour required to recover a progress status (required person-hour).

The computer 10 compares the acquired completion information with a work process in the acquired previously generated work plan on the day and calculates a progress status of the work process throughout a warehouse in real-time.

The computer 10 notifies an alert if the progress status of the work process is a threshold or less based on the calculation result (Step S3).

The computer 10 generates an alert that includes a floor map displaying a location where the progress status of a work process is a threshold or less; a progress status; an accepting order, etc. The computer 10 transmits the generated alert to the administrator terminal 40.

The administrator terminal 40 receives the alert and displays this alert on its display unit.

The computer 10 notifies an administrator of an alert by having the administrator terminal 40 display the generated alert if the progress status of the work process is a threshold or less based on the calculation result. The computer 10 preferably simulates a plan for carrying out the work without compensating for the progress status, calculates the predicted work efficiency of the entire work on the day, and notifies the administrator terminal 40 of the excess working hour. In this case, if the working hour results in exceeding the time that shown in the shipping order, an error indicating that the plan has difficulties may be displayed.

By viewing the displayed alert, an administrator will know that there is a delay in progress.

The computer 10 generates a recovery plan including a changed worker and/or work content each time the alert is notified (Step S4).

The computer 10 receives change of a worker and/or a work content of the previously generated work plan through the administrator terminal 40 each time the alert is notified.

The administrator checks the notified alert that has been transmitted to the administrator terminal 40 and judges whether or not change of the assignment and/or the work content of a worker should be input. The administrator terminal 40 can receive input change of the assignment and/or the work content of a worker. If an administrator determines that change of the work content is necessary, the administrator inputs the change content.

Examples of the change content include: a plan to reassign the work content being delayed in the progress to another worker; a plan to divide the day into morning and afternoon, maintain the initial assignment of the work content in the morning except for the point of a delay in the progress, and reassign the work content to a worker for separately compensating the work content being delayed in the progress in the afternoon; a plan to extract a work content initially assigned to multiple workers, which has less or no problems with fewer workers, and change the assignment of a worker from the extracted work content to the work content being delayed in the progress; and a plan to extract a work content that can be postponed after the following day without problems, planning the extracted work after the following day, and consolidate the work content that can be carried out by a current worker, and regenerate and assign the consolidated work content.

The administrator terminal 40 may receive such change plans one by one, may allow input of multiple plans, or may receive multiple plans along with their priorities.

The administrator terminal 40 transmits the change content received as described above to the computer 10.

The computer 10 receives a change content of the worker and the work content for the acquired work plan upon receiving the change content.

The computer 10 generates a recovery plan for the work plan based on the received change content.

The computer 10 generates a recovery plan to compensate a work process being delayed in the progress for the initial work plan on the day based on the change content. This recovery plan reflects the above-mentioned change content in the work plan after selection on the day.

The computer 10 simulates the generated recovery plan and calculates the work efficiency of the entire work on the day based on the recovery plan (Step S5).

The computer 10 simulates the generated recovery plan and calculates the sales amount and the cost based on the recovery plan. The computer 10 calculates the balance by subtracting the calculated cost from the calculated sales amount. The computer 10 calculates the profit by these calculations. The computer 10 calculates the work efficiency (total required time, cut time margin, margin rate, and excess person-hour) in the recovery plan.

The total required time is the time taken according to the simulation result (the actual time that it would take to carry out the warehouse work by using the recovery plan), which is the time required from the start to the end of work. The cut time is the deadline set for each package to be shipped. The cut time margin is the time obtained by subtracting the total required time from the cut time (from the time of the end of work to the cut time). The margin rate is the ratio of the cut time margin to the cut time. The excess person-hour is the number of workers required unit time when the cut time margin is negative.

The computer 10 determines a work plan after selection after selection on the day based on the recovery plan obtained in this manner. The warehouse workers carry out the actual warehouse works according to the determined work plan.

The above-mentioned example explains the case where the computer 10 receives change of a worker for the acquired work plan, but the same applies when the work volume is changed. The computer 10 notifies the administrator terminal 40 of the change of the work volume and whether or not the work can be completed within the scheduled work time. The computer 10 preferably calculates the work efficiency and notifies the administrator terminal 40 of a deviation (work efficiency loss) from the initial plan.

The warehouse work management system 1 enables to quickly correct a delay in progress caused by a trouble during a warehouse operation. The warehouse work management system 1 enables to recommend how to change the predicted worker plan and work plan to meet the shipping order on the day and also enables to carry out a balance simulation at that time if the worker plan and the work plan that were predicted on the previous day is inconsistent with the shipping order on the day.

### Functional configuration

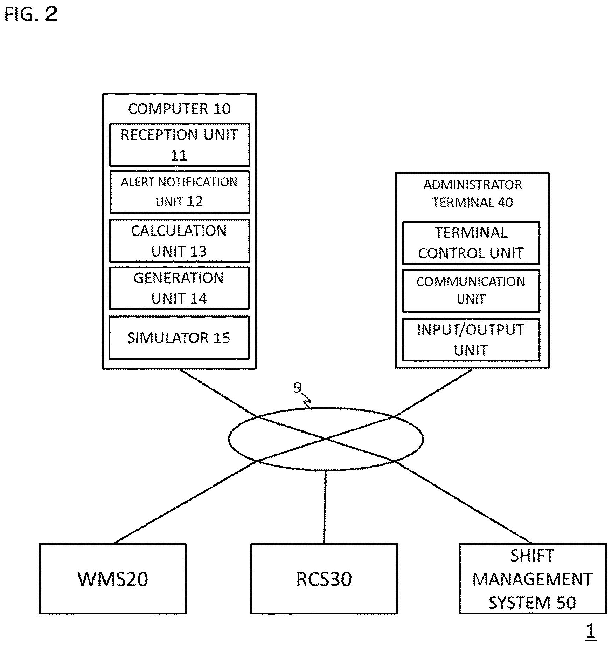

The functional configuration of the warehouse work management system 1 is explained below with reference to FIG. 2. The warehouse work management system 1 includes at least a computer 10. The computer 10 is data-communicatively connected with a WMS 20 that manages shipping orders, an RCS 30 that manages work plans, an administrator terminal 40 that is carried by an administrator who manages warehouse workers and work contents, and a shift management system 50 that is an attendance management system that manages attendance status for each warehouse worker by using shift data, etc., through a network 9 such as a public line network or an intranet.

The warehouse work management system 1 may include a WMS 20, an RCS 30, an administrator terminal 40, a shift management system 50, and other terminals and devices in addition to the computer 10. In this case, the warehouse work management system 1 executes the processes described later by using one or any combination of the included terminals, devices, or systems.

The computer 10 is a computer, a personal computer, etc., with server functions, which manages the work volume based on the worker and the shipping order in each process of a warehouse operation.

The computer 10 may be implemented with a single computer or multiple computers composing a cloud computer. The cloud computer herein may use any computer in a scalable manner to perform a specific function or may include multiple functional modules to realize a certain system, allowing for the free combination of those functions.

The computer 10 includes a control unit provided with a CPU (Central Processing Unit), a GPU (Graphics Processing Unit), a RAM (Random Access Memory), a ROM (Read Only Memory), etc. The computer 10 also includes a communication unit provided with a device for enabling communication with other terminals or devices.

The computer 10 also include an acquisition unit 11 that acquires completion information of a work process and an alert notification unit 12 that notifies an alert according to the progress status of a work process.

The computer 10 includes a storage unit provided with a data storage unit such as a hard disk, a semiconductor memory, a storage medium, or a memory card.

The computer 10 includes a processing unit provided with various devices that execute different processes, a calculation unit 13 that calculate the progress status of a work process, a generation unit 14 that generates a recovery plan including a changed worker and/or work content, and a simulator 15 that simulates the recovery plan and calculates the work efficiency.

In the computer 10, the control unit realizes a shipping order acquisition module, a work plan acquisition module, a shift data acquisition module, an insufficient worker notification module, a completion information acquisition module, an alert notification module, a change reception module, a recovery plan output module, a selection reception module, and an accelerable work notification module by reading a predetermined program in cooperation with the communication unit.

Additionally, in the computer 10, the control unit realizes a shipping order storage module, a work plan storage module, and a recovery plan storage module by reading a predetermined program in cooperation with the storage unit.

Additionally, in the computer 10, the control unit realizes an insufficient worker detection module, an insufficient worker judgment module, an insufficient worker-assigned work identification module, a progress status calculation module, a progress status judgement module, an alert generation module, a recovery plan generation module, a simulation module, a profit calculation module, a work efficiency calculation module, a simulation result generation module, a sorting module, a work plan determination module, and an early completion judgment module by reading a predetermined program in cooperation with the processing unit.

WMS 20 only has to be a system that manages general warehouse operations such as binning and shipping, and the detailed explanation is omitted.

RCS 30 only has to be a system that manages general warehouse equipment, and the detailed explanation is omitted.

The administrator terminal 40 is a terminal such as a mobile phone, a smartphone, a tablet device, or a personal computer carried by an administrator. The administrator terminal 40 includes a terminal control unit provided with a CPU, a GPU, a RAM, and a ROM. The administrator terminal 40 also includes a communication unit provided with a device, etc., that enables communication with the computer 10. The administrator terminal 40 also includes an input/output unit provided with various devices that execute input and output of screens, data, etc.

The shift management system 50 only has to be a system that manages the work status, etc., of a general warehouse worker, and the detailed explanation is omitted..

Each process executed by the warehouse work management system 1 is explained below along with the processes executed by the above-mentioned modules.

In this embodiment, the processes in warehouse work are assumed to include receiving, binning, picking, distribution processing, packing, and shipping. The profit includes not only simple gross profit but also sales amount, spending, balance, and profit rate.

### Shipping order acquisition process executed by computer 10

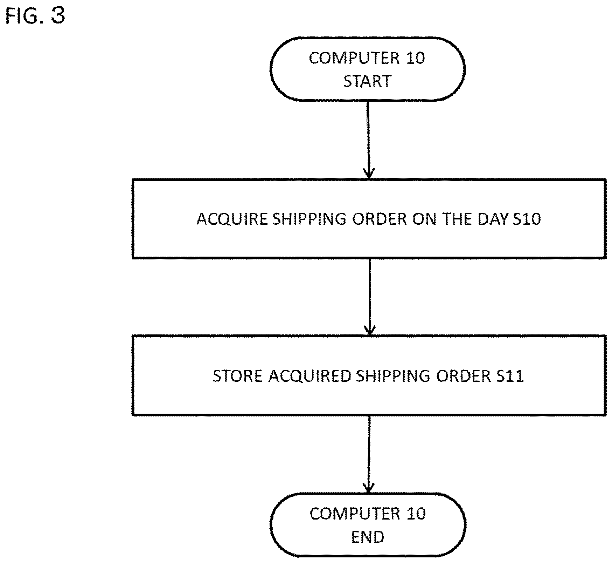

The shipping order acquisition process executed by the computer 10 is explained below with reference to FIG. 3. FIG. 3 is a diagram showing the flowchart of the shipping order acquisition process executed by the computer 10. The shipping order acquisition process refers to the detailed flow related to the acquisition process of a shipping order, which is a part of the above-mentioned process of acquiring a shipping order and a work plan (Step S0).

The shipping order acquisition module acquires a shipping order on the day (Step S10).

As mentioned above, the shipping order is data that includes a product ID, a shipping volume, and a deadline date and time.

The administrator terminal 40 receives input of a shipping order from an administrator and transmits the received shipping order to WMS 20.

WMS 20 receives the shipping order and stores the received shipping order in its storage unit. WMS 20 extracts a shipping order on the day from the stored shipping orders and transmits the extracted shipping order to the computer 10. WMS 20 can be configured to transmit a shipping order acquired from a customer system managed by a customer to the computer 10.

The shipping order acquisition module acquires a shipping order on the day by receiving the shipping order.

The shipping order storage module stores the acquired shipping order (Step S11).

The shipping order storage module stores the acquired shipping order in association with the identifier (e.g., name, ID, management number, reference number) of the shipping order.

The above is the shipping order acquisition process.

The shipping order acquisition process is a process that is carried out at a timing, for example, whenever a shipping order is updated, at predetermined intervals, or whenever a shipping order is completed. The computer 10 uses the shipping order acquired through the above-mentioned shipping order acquisition process to execute the processes described later.

The computer 10 can be configured to execute the processes described later without storing the shipping order during the shipping order acquisition process. In this case, the acquired shipping order only has to be used as is in the processes described later.

### Work plan acquisition process executed by computer 10

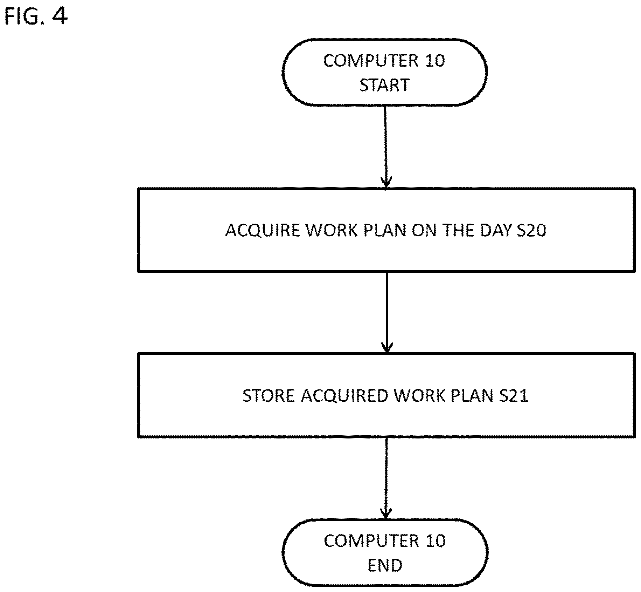

The work plan acquisition process executed by the computer 10 is explained below with reference to FIG. 4. FIG. 4 is a diagram showing the flowchart of the work plan acquisition process executed by the computer 10. The work plan acquisition process refers to the detailed flow related to the acquisition process of a work plan, which is a part of the above-mentioned process of acquiring a shipping order and a work plan (Step S0).

The work plan acquisition module acquires a work plan on the day (Step S20).

As described above, the work plan is the number of workers and their work contents (e.g., working hour and work volume), work processes, etc., for each process in warehouse work.

RCS 30 extracts a work plan on the day among the previously generated work plans and transmits the extracted work plan on the day to the computer 10.

The work plan acquisition module acquires the work plan on the day by receiving this work plan. The source of the work plan is not limited to RCS 30.

The work plan storage module stores the acquired work plan (Step S21).

The work plan storage module stores the acquired work plan in association with the identifier (e.g., name, ID, management number, reference number) of the work plan.

The above is the work plan acquisition process.

The work plan acquisition process is a process that is carried out at a timing, for example, whenever a work plan is updated, at predetermined intervals, a predetermined hour before a work start time or after a work end time. The computer 10 uses the work plan acquired through the above-mentioned work plan acquisition process to execute the processes described later.

The computer 10 can be configured to execute the processes described later without storing the work plan during the work plan acquisition process. In this case, the acquired work plan only has to be used as is in the processes described later.

### Insufficient worker notification process executed by computer 10

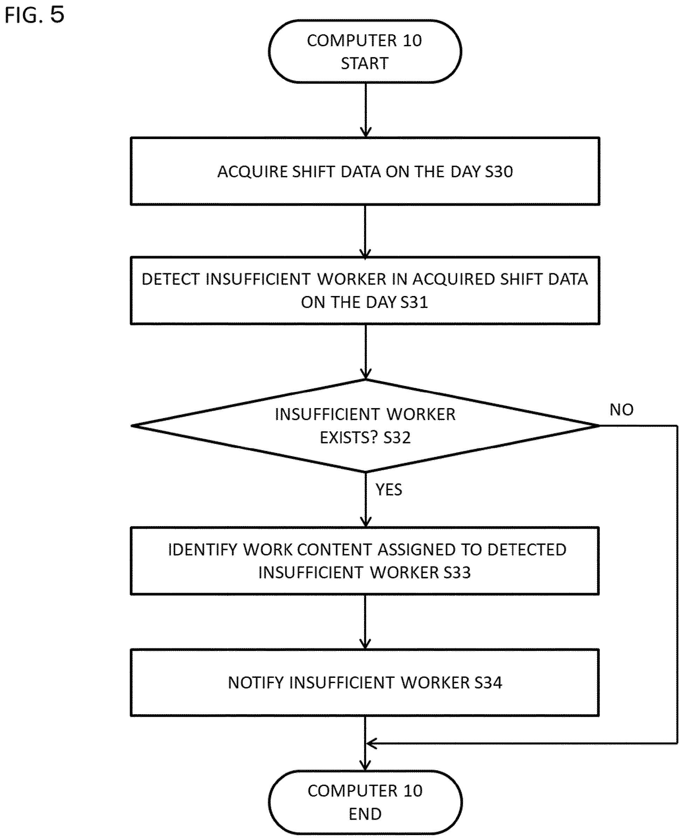

The insufficient worker notification process executed by the computer 10 is explained below with reference to FIG. 5. FIG. 5 is a diagram showing the flowchart of the insufficient worker notification process executed by the computer 10.

The shift data acquisition module acquires shift data on the day (Step S30).

The shift management system 50 extracts shift data on the day and transmits the extracted shift data to the computer 10.

The shift data acquisition module acquires shift data on the day by receiving the shift data.

The insufficient worker detection module detects an insufficient worker in the acquired shift data on the day (Step S31).

The insufficient worker detection module analyzes the acquired shift data on the day and detects a warehouse worker who is unable to carry out a part of or the entire warehouse work assigned on the day due to a change such as absence, late arrival, or early leaving, as an insufficient worker. The insufficient worker detection module detects other warehouse workers who are present as workers who are able to carry out the scheduled work.

The insufficient worker judgement module judges whether or not an insufficient worker exists based on the detection result (Step S32).

If the insufficient worker judgement module judges that no insufficient workers exist (Step S32 NO), the computer 10 terminates the insufficient worker notification process.

On the other hand, if the insufficient worker judgement module judges that an insufficient worker exists based on the detection result (Step S32 YES), the insufficient worker-assigned work identification module identifies the work content assigned to the detected insufficient worker (Step S33).

The insufficient worker-assigned work identification module refers to the work plan acquired through the above-mentioned work plan acquisition process and identifies the work content assigned to the detected insufficient worker. The insufficient worker-assigned work identification module may refer to the acquired shift data and identifies the work content assigned to the detected insufficient worker.

The insufficient worker notification module notifies the administrator terminal 40 of the insufficient worker (Step S34).

The insufficient worker notification module transmits the number of insufficient workers and their assigned work contents and the periods on the day to the administrator terminal 40. The period is one day if an insufficient worker is absent or a predetermined time zone such as morning or afternoon if an insufficient worker is late arrival or early leaving.

The administrator terminal 40 receives the number of insufficient workers and their assigned work contents and the periods on the day and displays them on its display unit.

The insufficient worker notification module notifies the insufficient workers by having the administrator terminal 40 display the number of insufficient workers and their assigned work contents and the periods on the day.

The above is the insufficient worker notification process.

### Alert notification process executed by computer 10

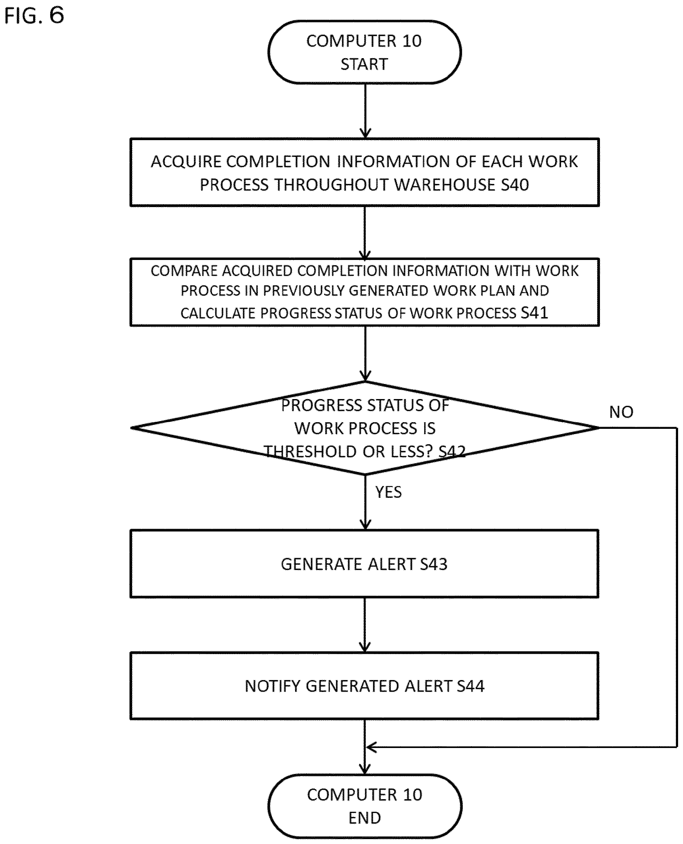

The alert notification process executed by the computer 10 is explained below with reference to FIG. 6. FIG. 6 is a diagram showing the flowchart of the alert notification process executed by the computer 10. The alert notification process is detail of the above-mentioned acquisition process of completion information of a work process (Step S1), the above-mentioned calculation process of the progress status of a work process (Step S2), and the above-mentioned alert notification process of notifying an alert according to the progress status of a work process (Step S3). The alert notification process is carried out at the same time of or after the above-mentioned work plan acquisition process.

The completion information acquisition module acquires completion information of each work process throughout a warehouse (Step S40).

The completion information includes the content, the completion time, the working hour, etc., of a completed work process.

The completion information acquisition module acquires completion information for each work process throughout a warehouse that has been completed when the alert notification process is executed, i.e., in real-time.

RCS 30 transmits the completion information to the computer 10.

The completion information acquisition module acquires completion information of each work process throughout a warehouse by receiving the completion information.

The completion information acquired by the completion information acquisition module may be completion information of each process where work has already been carried out and of the process currently in progress at the time of the acquisition or may be completion information of only the process currently in progress at the time of the acquisition.

The progress status calculation module compares the acquired completion information with a work process in a previously generated work plan and calculates a progress status of the work process (Step S41).

As described above, examples of the progress status includes an impact on the work plan (progress rate against a work plan, completed work volume, and required work volume in a work plan), a profit difference due to a progress status (impact on balance), and a person-hour required to recover a progress status (required person-hour).

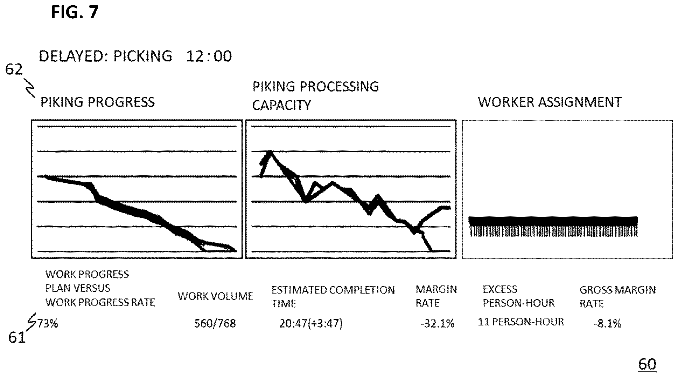

The progress status calculation module calculates a plan versus work progress rate, a work volume, an estimated completion time, a margin rate, an excess person-hour, and a gross margin rate as a progress status (refer to FIG.7).

The progress status calculation module calculates the progress status of a work process based on the completion information and the work plan on the day that has been acquired through the above-mentioned work plan acquisition process. The progress status calculation module compares the completed work process for a process in the completion information with the work process for this process in the work plan on the day and calculates the progress status in this process.

The progress status calculation module may compare the completion information of the work process for a process that has already been performed and the work process for a process being in progress at the time of the acquisition with the work process in a previously generated work plan. Alternatively, the progress status calculation module may compare the completion information of the work process for a process being in progress at the time of the acquisition with the work process in a previously generated work plan.

The progress status of a work process that is calculated by the progress status calculation module is explained below with reference to FIG. 7. FIG. 7 is a diagram schematically showing an example calculation result calculated by the progress status calculation module. FIG. 7 is a diagram schematically showing an example calculation result of the status progress of picking that is calculated by the progress status calculation module.

As the calculation result 60, the progress status calculation module presents a progress table 61 and a progress graph 62 that compile each figure and content of the calculated progress as a table and a graph, respectively.

The progress table 61 shows a plan versus work progress rate of 73%, a work volume of 560/768, an estimated completion time of 20:47 (+3:47), and a margin rate of -32.1%, as an impact on a work plan; a gross margin rate of -8.1% as a profit difference due to a process status; and an excess person-hour of 11 as a person-hour required to recover the progress status (required person-hour).

The progress graph 62 shows these contents together.

The reasons for such a delay in progress include those caused by an insufficient worker detected in the above-mentioned insufficient worker notification process and an unexpected trouble.

Returning to FIG. 6, the alert notification process is continued to be explained below.

The progress status judgement module judges whether or not the progress status of a work process is a threshold or less based on the calculation result (Step S42).

The threshold is previously set, which is a percentage or number set for a progress rate, a remaining work volume, a start time, an estimated completion time, etc.

The progress status judgement module judges whether or not some or all of the parameters are the respective set thresholds or less.

If the progress status judgement module judges that the calculated progress status is more than the threshold (Step S42 NO), the computer 10 terminates the alert notification process.

On the other hand, if the progress status judgement module judges that the calculated progress status is the threshold or less (Step S42 YES), the alert generation module generates an alert (Step S43).

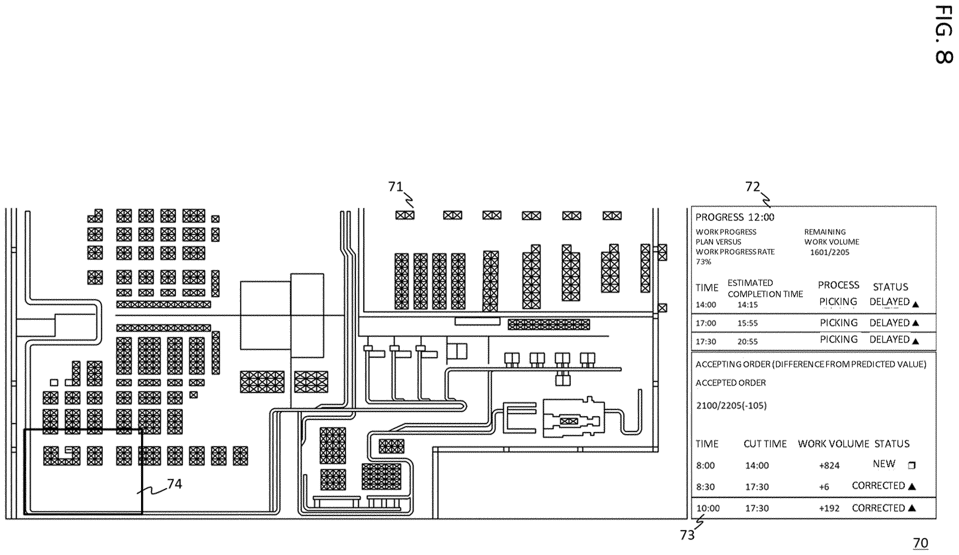

The alert generation module generates an alert that includes a floor map displaying a location where the calculated progress status of a work process is a threshold or less; a progress status; an accepting order, etc., (refer to FIG. 8). The alert generation module displays the location on the floor map by using, for example, highlighting, outlining, filling, or adding an icon. Additionally, the alert generation module generates a table, etc., visualizing a progress status and an accepting order. In addition, the alert generation module generates a graph etc., visualizing a progress of the entire work, a processing capacity in the entire work, a worker assignment, etc.

The alert generated by the alert generation module is explained below with reference to FIG. 8.

FIG. 8 is a diagram schematically showing an example alert generated by the alert generation module.

The alert 70 shows a floor map 71, a progress status 72, and an accepting order 73.

In the floor map 71, the location of the work process being delayed in progress (the progress status with a threshold or less) is indicated by an outline 74. Additionally, near the floor map 71, a progress status 72 visualizing the calculated progress status and the process being delayed as a table and an accepting order 73 visualizing an acquired accepting order as a table.

These arrangements and display modes (the display mode of a location where a delay in progress has occurred, the display mode of a floor map, the display mode of a progress status, and the display mode of an accepting order) can be appropriately modified.

The alert 70 may include only some of the display contents, for example, only a progress status or only a floor map and a progress status. The alert 70 may include a graph etc., visualizing a progress of the entire work, a processing capacity in the entire work, a worker assignment, etc.

Returning to FIG. 6, the alert notification process is continued to be explained below.

The alert notification module notifies the generated alert (Step S44). The alert notification module transmits the generated alert to the administrator terminal 40.

The administrator terminal 40 receives the alert and displays this alert on its display unit. The administrator terminal 40 displays the above-mentioned alert 70 shown in FIG. 8 on its display unit.

The alert notification module notifies the generated alert by having the administrator terminal 40 display this alert.

The administrator terminal 40 transitions to a screen displaying the above-mentioned calculation results 60 shown in FIG.7 by receiving input for the displayed alert.

By viewing the alert 70, an administrator will know that there is a delay in progress, a location where there is a delay, a progress status, etc.

The above is the alert notification process.

### Recovery plan generation process executed by computer 10

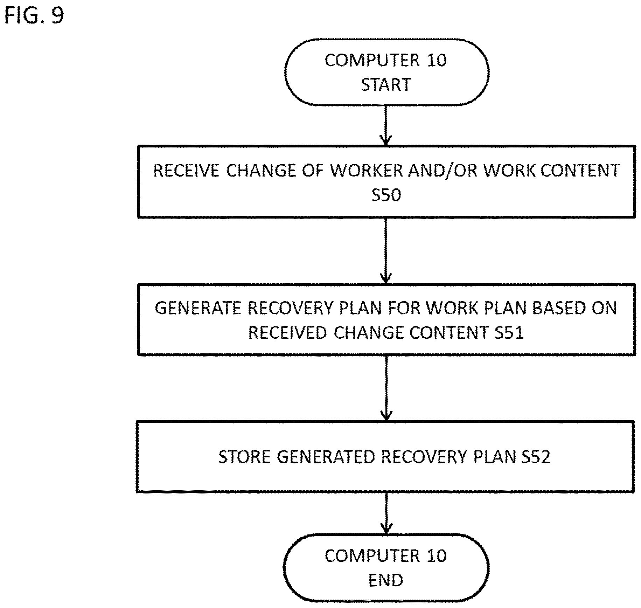

The recovery plan generation process executed by the computer 10 is explained below with reference to FIG. 9. FIG. 9 is a diagram showing the flowchart of the recovery plan generation process executed by the computer 10. The recovery plan generation process is detail of the above-mentioned generation process of a recovery plan (Step S4), which is carried out each time the above-mentioned alert notification process is performed to notify an alert.

The change reception module receives change of a worker and/or a work content (Step S50).

The administrator terminal 40 receives input of change of a worker and/or a work content from an administrator who has viewed the alert. The administrator terminal 40 receives input of change of the assignment and/or the work content of a worker to correct the delay of the progress status based on the content of the progress status in the alert notified from the above-mentioned alert notification process.

The case where change of the work content may be required is not only in the case where an alert occurs but also the case where an inconsistency of the worker plan and the work plan generated up to the previous day with the actual shipping order.

An example of the case where such change of the work plan is necessary includes the case where the actual shipping order on the day is inconsistent with the worker plan and the work plan on the day that were generated based on the shipping order on the day that was predicted on the previous day. Specifically, if the shipping order is significantly higher than predicted, it is necessary to cancel the planned work content for the shipping on the next day and change to the work content for the shipping on the day, or it is necessary to adjust the workers (e.g., by having the workers work late). Alternatively, if the shipping order that needs to be processed manually is higher than predicted, it is necessary to reduce the workers for automated work and increase the workers for manual work. Alternatively, if the shipping order with an earlier cut time is higher than predicted, it is necessary to assign workers to this shipping order with an earlier cut-off time by shifting them from the shipping order with a later cut time to ensure that the work is completed earlier. To address these issues, the administrator terminal 40 receives input of change of the assignment and/or the work content of a worker as well.

Examples of the change content received by input includes: a content to reassign the work content being delayed in the progress to another worker; a content to divide the day into morning and afternoon, maintain the initial assignment of the work content in the morning except for the point of a delay in the progress, and reassign the work content to a worker for separately compensating the work content being delayed in the progress in the afternoon; a content to extract a work content initially assigned to multiple workers, which has less or no problems with fewer workers, and change the assignment of a worker from the extracted work content to the work content being delayed in the progress; and a content to extract a work content that can be postponed after the following day without problems, planning the extracted work after the following day, and consolidate the work content that can be carried out by a current worker, and regenerate and assign the consolidated work content. Examples of the change received by input further includes: canceling the work content for shipping of the next day and changing to the cancelled work content for shipping on the day if the shipping order is significantly higher than predicted; reducing the workers for an automated work content and increasing the workers for a manual work; reducing the workers for an automated work content and increasing the workers for a manual work if the shipping order that needs to be processed manually is higher than predicted; and assigning the workers for a shipping order with a later cut-off time to those with an earlier cut-off time to ensure that the work will be completed earlier if the shipping order with an earlier cut-off time is higher than predicted.

The administrator terminal 40 may receive such change plans one by one, may allow input of multiple plans, or may receive multiple plans along with their priorities.

The change content that the change reception module receives is explained below.

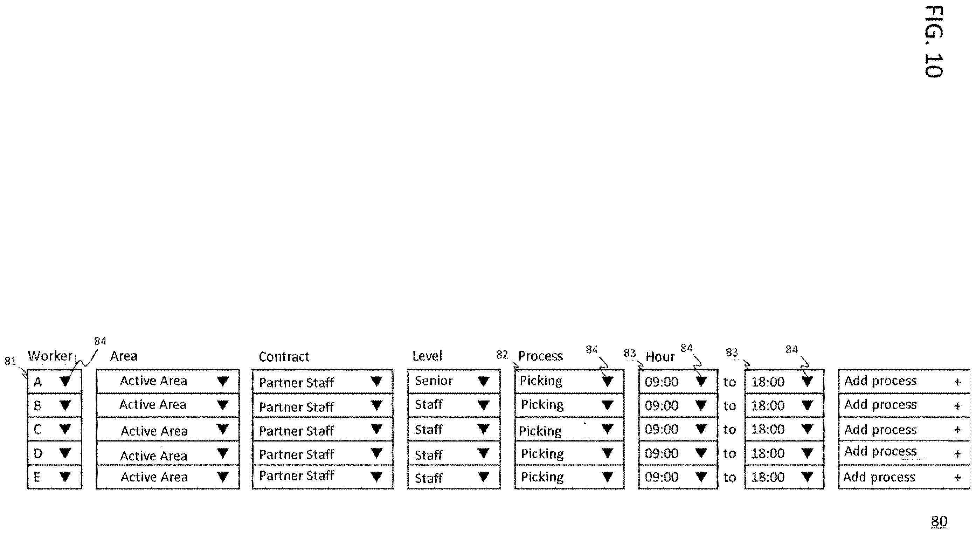

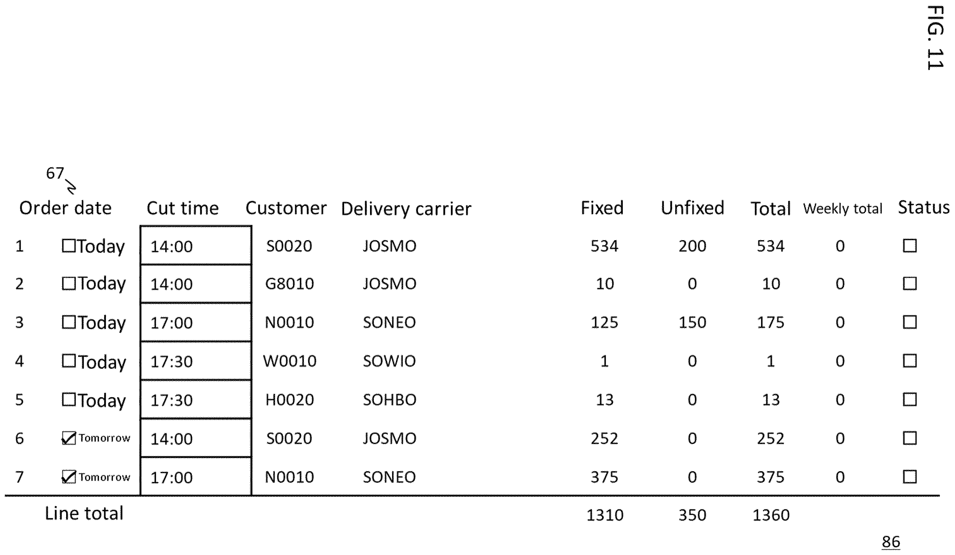

If an alert has been notified for picking, the administrator terminal 40 receives input of change to assign a specified number of workers (e.g., 1 person) from packing to picking (refer to FIG. 10). Additionally, the administrator terminal 40 receives input of change to assign a specified number of workers (e.g., 1 person each) from distribution processing and packing to picking from starting in the afternoon (refer to FIG. 10). Additionally, the administrator terminal 40 receives input of reducing the work volume for shipping scheduled after the following day (refer to FIG. 11). The administrator terminal 40 receives change of the assignment and the work content of a worker from a process where no alerts are notified, in the same way, even if the computer 10 notifies an alert in any of or one or more combinations of the processes.

The UI (user interface) when the administrator terminal 40 receives input of change of the worker is explained below with reference to FIG. 10. FIG. 10 is a diagram schematically showing an example change input UI displayed when the administrator terminal 40 receives input of change of the worker.

The administrator terminal 40 displays the change input UI 80 on its display unit and receives input from the administrator.

The administrator terminal 40 receives input of the identifier of a worker to be assigned in the worker input field 81. At this time, the administrator terminal 40 receives input for the icon 84 and receives selection input of a worker through a pull-down menu.

The administrator terminal 40 receives input of a process to which the worker is assigned in the process input field 82. At this time, the administrator terminal 40 receives input for the icon 84 and receives selection input of a process through a pull-down menu.

The administrator terminal 40 receives input of the assignment period for the worker in the time input field 83. At this time, the administrator terminal 40 receives input for the icon 84 and receives selection input of the start time and the end time of the period through a pull-down menu.

This change input UI is merely an example, and the display content, the display order, the input content, etc., are not limited to the UI shown in FIG. 10. For example, the UI does not have to have a pull-down menu from the icon 84 and may display other display contents, display orders, input contents, etc.

The UI when the administrator terminal 40 receives input of change of the work content is explained below with reference to FIG. 11. FIG. 11 is a diagram schematically showing an example change input UI displayed when the administrator terminal 40 receives input of change of the work content.

The administrator terminal 40 displays the change input UI 86 on its display unit and receives input from the administrator. This change input UI 86 is based on the generated shipping order.

The administrator terminal 40 receives input for a shipping order for which the work volume is to be reduced after the following day. Specifically, the administrator terminal 40 receives input for a shipping order for which the work volume is to be reduced by receiving selection input, etc., for the shipping order that an administrator desires from the shipping orders displayed in the change input UI 86. The administrator terminal 40 clearly indicates that input has been received by placing a check mark in a box in the date column 87 of the shipping order received by input in the change input UI 86.

This change input UI is merely an example, and the display content, the display order, the input content, etc., are not limited to the UI shown in FIG. 11. For example, the UI does not have to have a check mark and may display other display contents, display orders, input contents, etc.

Returning to FIG. 9, the process in Step S50 of the recovery plan generation process is continued to be explained below.

The administrator terminal 40 transmits the change content received by input to the computer 10.

The change reception module receives change of a worker and/or a work content by receiving the change content.

If the change reception module has received only one change content from the administrator terminal 40, the change reception module performs the processes described later for this one change content only. If the change reception module has received more than one change content, the change reception module performs the processes described later for each of the change contents. If the change reception module has received a change content along with a priority, the change reception module performs the processes according to this priority.

The change reception module is described as receiving a change content through the administrator terminal 40 but may directly receive a change content. For example, the change reception module may learn correlation between a work content and a worker and receive change of a worker and/or a work content of the case where an alert has been notified based on the learning result. Alternatively, the change reception module may receive change of the work and/or the work content based on a previously set worker and/or work content if an alert has been notified.

The recovery plan generation module generates a recovery plan for the work plan based on the received change content (Step S51).

The recovery plan generation module generates a recovery plan that reflects the received change content in the work plan after selection on the day. In other words, the recovery plan generated by the recovery plan generation module reflects the received change of a worker and/or a work content in the work plan after selection on the day.

The recovery plan generation module generates one recovery plan based on the received one change content if only one change content has been received and generates more than one recovery plan based on the respective change contents if more than one change content has been received.

In the following description, the recovery plan generation module is assumed to generate Recovery Plan1 by changing one worker for distribution processing to a worker for picking; Recovery Plan2 by changing one worker for distribution processing and one worker for packing to workers for picking from the afternoon; and Recovery Plan 3 by reducing the work volume for shipping scheduled after the following day.

The number of recovery plans is not limited to the above-mentioned number, may be more or less. The recovery plans are appropriately generated based on the number of the received workers and/or work contents.

The recovery plan generation module is described as generating a recovery plan but may be configured to acquire a recovery plan generated by an administrator. For example, the administrator terminal 40 receives input of a recovery plan generated by an administrator. Alternatively, the administrator terminal 40 generates a recovery plan based on the received change content and then transmits this recovery plan to the computer 10. The computer 10 can also be configured to be considered as generating a recovery plan by receiving the recovery plan.

The recovery plan storage module stores the generated recovery plan (Step S52).

The recovery plan storage module stores the generated recovery plan in association with the identifier (e.g., name, ID, management number, reference number) of this recovery plan. The recovery plan storage module stores Recovery Plan 1, Recovery Plan 2, and Recovery Plan 3.

The above is the recovery plan generation process.

The computer 10 uses the recovery plan generated through the above-mentioned recovery plan generation process to execute the processes described later.

The computer 10 can be configured to execute the processes described later without storing the recovery plan during the recovery plan generation process. In this case, the generated recovery plan only has to be used as is in the processes described later.

### Work plan determination process executed by computer 10

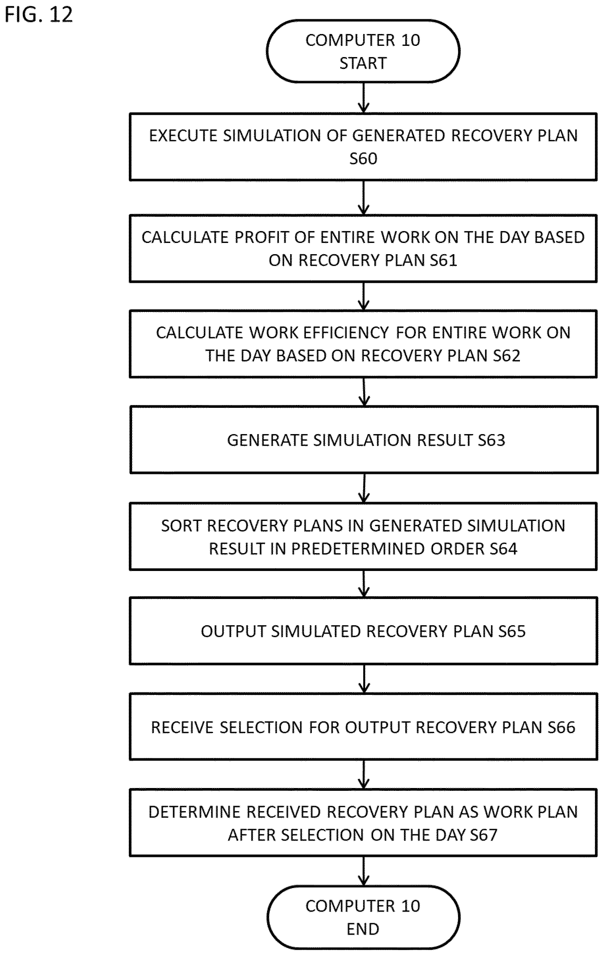

The work plan determination process executed by the computer 10 is explained below with reference to FIG. 12. FIG. 12 is a diagram showing the flowchart of the work plan determination process executed by the computer 10. The work plan determination process is detail of the above-mentioned calculation process of the profit of the entire work on the day (Step S5). The work plan determination process is carried out after the above-mentioned recovery plan generation process.

The simulation module executes the simulation of the generated recovery plan (Step S60).

The simulation module executes the simulation of the recovery plan generated by the above-mentioned recovery plan generation process. The content of the simulation executed by the simulation module only has to reproduce each process carried out by a worker in the generated recovery plan through simulation. The simulation module simultaneously simulates Recovery Plan 1, Recovery Plan 2, and Recovery Plan 3.

The simulation module simulates one recovery plan if only one recovery plan has been generated and simultaneously simulates more than one recovery plan if more than one recovery plan has been generated.

The profit calculation module calculates the profit of the entire work on the day based on the recovery plan (Step S61).

The profit calculation module calculates sales amount, spending, and balance for each process in the recovery plan. The term "spending" is synonymous with "cost," and the term "balance" is synonymous with "profit." The balance is calculated by subtracting a spending from a sales amount. The sales amount for each process herein is the delivery cost paid by a shipper allocated or previously allocated to each process. Additionally, the spending is the labor cost of a worker assigned to each process. The profit calculation module calculates the sales amount, the spending, and the balance for each process of receiving, binning, picking, distribution processing, packing, and shipping.

The profit calculation module calculates the total sales amount, the total spending, and the total balance for each of these processes. The profit calculation module calculates the profit rate by dividing the total balance by the total sales amount and expressing the resulting value as a percentage. The profit calculation module calculates the sales amount, the spending, the balance, and the profit rate for the entire work on the day based on the recovery plan as the overall balance, based on the calculation results.

The profit calculation module is assumed to calculate the sales amount of 420,000 yen, the spending of 383,040 yen, the balance of 36,960 yen, and the profit rate of 8.8% for the entire work on the day based on Recovery Plan 1; the sales amount of 450,000 yen, the spending of 390,600 yen, the balance of 59,400 yen, and the profit rate of 13.2% for the entire work on the day based on Recovery Plan 2; and the sales amount of 434,786 yen, the spending of 382,354 yen, the balance of 52,432 yen, and the profit rate of 12.1% for the entire work on the day based on Recovery Plan 3. The following process is explained based on these calculations.

The figure for each item is appropriately calculated based on the shipping order, the work plan, the received worker and/or work content, etc.

The work efficiency calculation module calculates the work efficiency for the entire work on the day based on the recovery plan (Step S62).

The work efficiency includes a total required time, a cut time margin, a margin rate, and an excess person-hour.

The work efficiency calculation module calculates the work volume for each process of receiving, binning, picking, distribution processing, packing, or shipping. The work efficiency calculation module calculates the total required time based on the time taken according to the simulation result (the actual time that it would take to carry out the warehouse work by using the recovery plan). The cut time is the deadline set for each package to be shipped, which is the time required from the start to the end of work. The work efficiency calculation module calculates the cut time margin based on the time obtained by subtracting the total required time from the cut time. The work efficiency calculation module also calculates the ratio of the cut time margin to the cut time as the margin rate. The cut time margin of a positive value means that the work time is sufficient. On the other hand, the cut time margin of a negative value means that the work time is insufficient. The work efficiency calculation module calculates the excess person-hour as the number of workers required unit time when the cut time margin is negative.

In this embodiment, the work efficiency calculation module is assumed to calculate the total required time of 12h 7m (12 hours 7 minutes), the cut time margin of -4:07 (minus 4 hours 7 minutes), the margin rate of -17.5%, and the excess person-hour of 13 person-hours for the entire work on the day based on Recovery Plan 1; the total required time of 9h 14m (9 hours 14 minutes), the cut time margin of -1:14 (minus 1 hour 14 minutes), the margin rate of -13.4%, and the excess person-hour of 6 person-hours for the entire work on the day based on Recovery Plan 2; and the total required time of 7h 57m (7 hours 57 minutes), the cut time margin of 0:03 (0 hours 3 minutes), the margin rate of 0.6%, and the excess person-hour of 0 person-hours for the entire work on the day based on Recovery Plan 3. The following process is explained based on these calculations.

The figure for each item is appropriately calculated based on the shipping order, the work plan, the received worker and/or work content, etc.

The simulation result generation module generates a simulation result (Step S63).

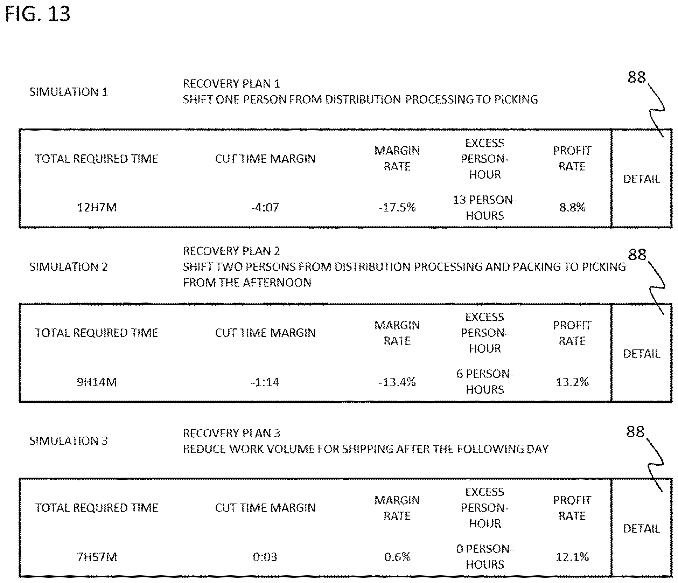

The simulation result generation module generates a simulation result that compiles the profit and the work efficiency that have been calculated through the process described in the above-mentioned Steps S61 and S62, respectively, for each recovery plan. The simulation result generation module generates a simulation result by compiling the simulated content compiling the identifier of each recovery plan; the change content of the worker and/or the work content for the recovery plan; the calculated sales amount, spending, balance, and profit rate (including a sales amount, a spending, and a balance for each process) on the day in the recovery plan; the simulated content of the calculated total required time, cut-time margin, margin rate, excess person-hour on the day in the recovery plan; the overall progress (e.g., work volume, completion rate, for each process), the processing capacity, the worker assignment, etc., visualized in a graph, a table, etc., of each recovery plan (refer to FIG. 13).

In FIG. 13, the simulation result generation compiles a simulation result by compiling the name of each recovery plan, the change content, the work efficiency and the profit rate for the entire work on the day in this recovery plan, and the detail icon 88 linked to other contents.

The simulation result generated by the simulation result generation module is not limited to the example shown in FIG.13, which may include other contents or any of or one or more combinations of these contents. Instead of displaying a detail icon 88, other contents may be configured to be displayed as is.

Returning to FIG. 12, the work plan determination process is continued to be explained below.

The sorting module sorts the recovery plans in the generated simulation result in a predetermined order (Step S64).

The predetermined order is based on the profit and/or the work efficiency. Specifically, the order of the profits is from largest to smallest of the profits (profit rates) for the entire work on the day. The order of work efficiencies is an optimal order from largest to smallest of the work efficiencies, which is any of or one or more combinations of orders of the optimal total required times, the optimal cut time margins, the optimal excess person-hours, and the optimal margin rates. If multiple change contents are received along with the priorities set by an administrator, the recovery plans are sorted by these priorities.

An example of the sorting executed by the sorting module is explained below.

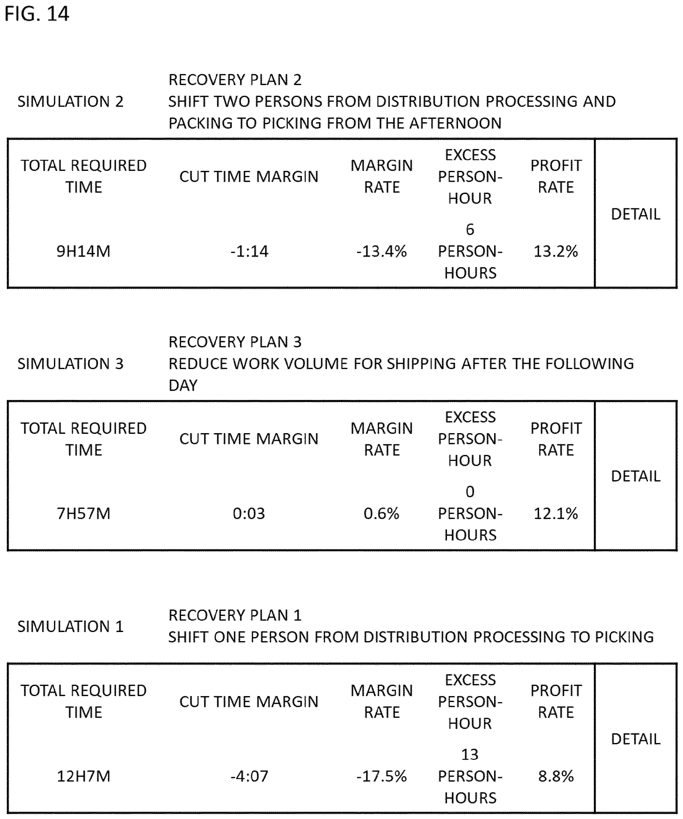

The sorting module sorts recovery plans in the simulation result in descending order of the profits for the entire work on the day based on the profit calculated for each recovery plan (refer to FIG. 14). In FIG. 14, the sorting module sorts the recovery plans in the simulation result shown in FIG. 13 in descending order of the profit rates in Recovery Plan 2, Recovery Plan 3, and Recovery Plan 1.

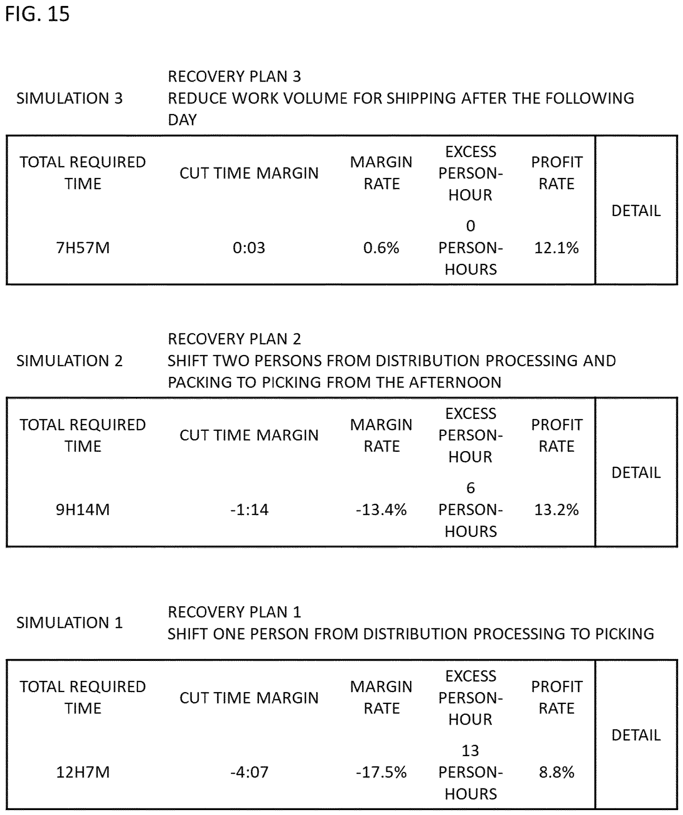

Additionally, the sorting module sorts recovery plans in the simulation result in optimal order of the cut time margins based on the cut time margin calculated for each recovery plan (refer to FIG. 15). In FIG. 15, the sorting module sorts recovery plans in the simulation result shown in FIG. 13 in optimal order of the cut time margins in Recovery Plan 3, Recovery Plan 2, and Recovery Plan 1.

The sorting module can also sort the recovery plans in the simulation result in optimal order of the contents of the work efficiency based on the content of the work efficiency calculated for each recovery plan, in the same way as other work efficiency contents.

The sorting module can be configured to sort the recovery plans in the simulation result based on not only one content but also a combination of multiple contents. For example, the sorting module can be configured to sort the recovery plans in descending order of the profits and by optimal order of the cut time margins. To sort recovery plans based on multiple contents as described above, the sorting module only has to perform the sorting based on the priorities, thresholds, etc., previously set for each content.

Returning to FIG. 12, the work plan determination process is continued to be explained below.

The recovery plan output module outputs the simulated recovery plan (Step S65).

The recovery plan output module transmits the simulation result in which the recovery plans have been sorted by the above-mentioned predetermined order (e.g., the descending order of the profits or the optimal order of the work efficiencies for the entire work on the day) to the administrator terminal 40. In this embodiment, the recovery plan output module transmits the simulation result in which the recovery plans have been sorted in descending order of cut time margins to the administrator terminal 40, as shown in FIG. 15.

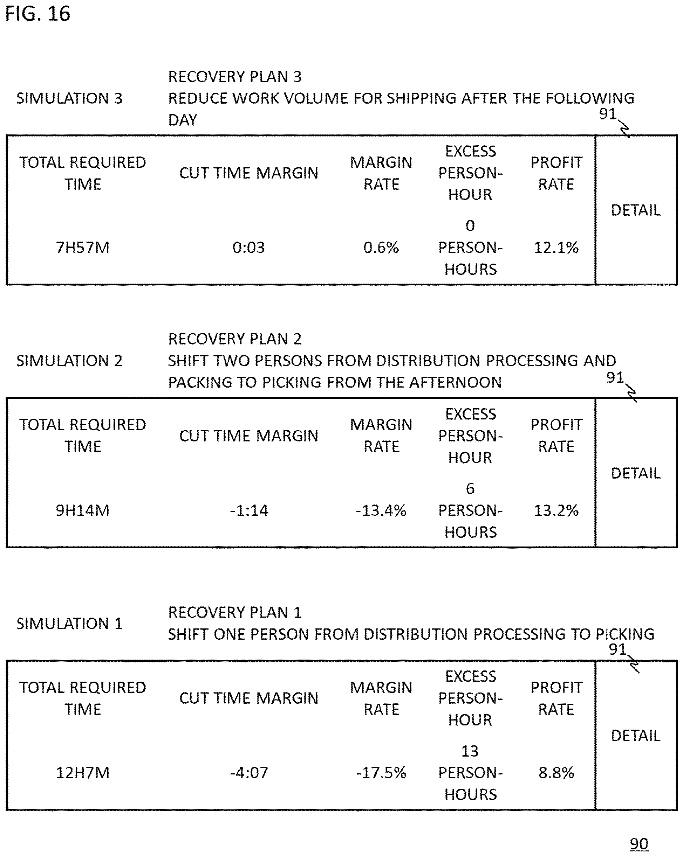

The administrator terminal 40 receives the simulation result and displays this simulation result on its display unit, etc., (refer to FIG. 16).

The recovery plan output module outputs the simulated recovery plan by displaying the simulation result on the administrator terminal 40.

The simulation result displayed on the administrator terminal 40 is explained below with reference to FIG. 16. FIG. 16 is a diagram schematically showing an example simulation result displayed on the administrator terminal 40.

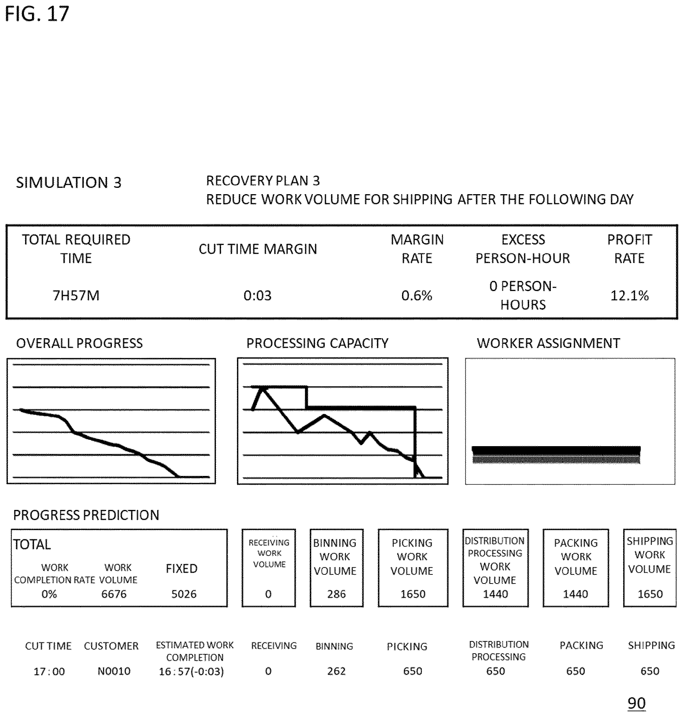

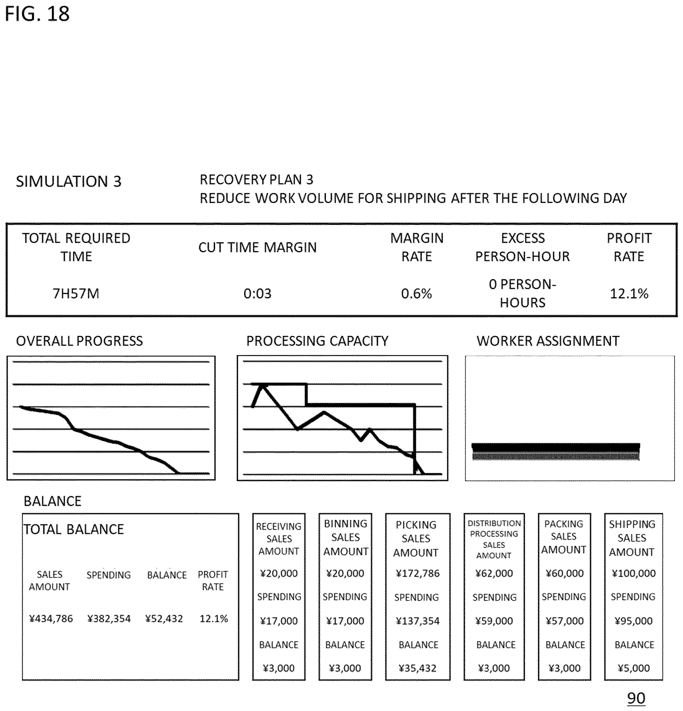

The administrator terminal 40 displays the simulation result 90 on its display unit based on the received simulation result. The administrator terminal 40 receives input by a tap operation on a detail icon 91 and transitions to a screen that displays the simulated contents linked to the detail icon 91, such as graphs of the overall progress, the processing capacity, and the worker assignment; the progress of the entire or each process; and the overall balance and the balance for each process (refer to FIGs. 17 and 18).

FIG. 17 is a diagram schematically showing an example screen displaying simulated contents. In FIG. 17, the administrator terminal 40 displays the identifier of each recovery plan; the change content of the worker and/or the work content for the recovery plan; the calculated profit rate on the day in the recovery plan; the calculated total required time, cut-time margin, margin rate, excess person-hour on the day in the recovery plan; and the simulated content of the overall progress (e.g., work volume, completion rate, for each process), the processing capacity, the worker assignment, etc., visualized in a graph, a table, etc., of each recovery plan, as the simulation result 90. The administrator terminal 40 changes the content displayed in the simulation result 90 to the content shown in FIG. 18 by receiving a predetermined input. The administrator terminal 40 changes the content displayed in the simulation result 90 to the content shown in FIG. 16 by receiving a predetermined input.

FIG. 18 is a diagram schematically showing an example screen displaying simulated contents. In FIG. 18, the administrator terminal 40 displays the identifier of each recovery plan; the simulated content of the change content of the worker and/or the work content for the recovery plan; the calculated sales amount, spending, balance, profit rate on the day (including those for each process) in the recovery plan; the calculated total required time, cut-time margin, margin rate, excess person-hour on the day in the recovery plan; and the overall progress, the processing capacity, the worker assignment, etc., visualized in a graph, a table, etc., of each recovery plan as the simulation result 90. The administrator terminal 40 changes the content displayed in the simulation result 90 to the content shown in FIG. 17 by receiving a predetermined input. The administrator terminal 40 changes the content displayed in the simulation result 90 to the content shown in FIG. 16 by receiving a predetermined input.

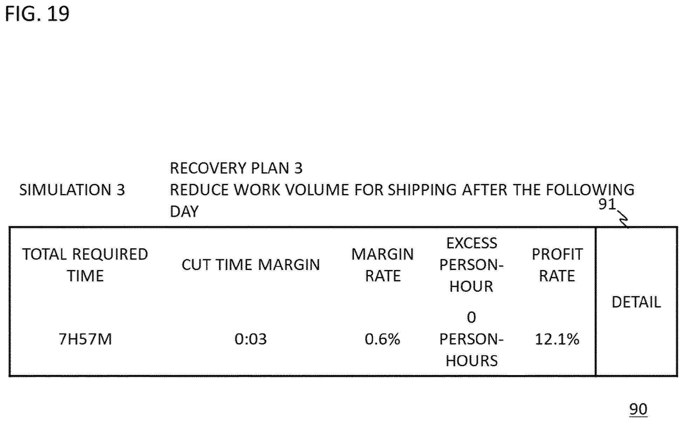

In the above-mentioned explanation, the computer 10 is configured to output all simulated recovery plans but may be configured to output a recovery plan that completes the work process for the entire warehouse on the day within the same day. Specifically, the recovery plan output module only has to extract only a recovery plan with the calculated cut time margin of zero minutes or more from the simulation result and output the simulation result of only the extracted recovery plan to the administrator terminal 40. In this embodiment, the recovery plan output module extracts only Recovery Plan 3 from the simulation result and outputs the simulation result of only Recovery Plan 3 to the administrator terminal 40 (refer to FIG. 19).

Returning to FIG. 12, the work plan determination process is continued to be explained below. The selection reception module receives selection for the output recovery plan (Step S66).

The administrator terminal 40 receives selection input for a recovery plan desired by an administrator from the simulation result displayed on itself and transmits the received recovery plan to the computer 10. The administrator terminal 40 receives selection input for the desired recovery plan from the simulation result 90 shown in FIG. 16 and transmits the received recovery plan to the computer 10.

The selection reception module receives selection for the output recovery plan by receiving the recovery plan.

The work plan determination module determines the received recovery plan as the work plan after selection on the day (Step S67).

The work plan determination module changes the initial work plan on the day acquired through the above-mentioned work plan acquisition process to the worker and the work content in the received recovery plan and determines the work plan after selection on the day.

The above is the work plan determination process.

The computer 10 may, for example, inform a warehouse worker and an administrator of the determined work plan, thereby making them aware of the new work plan. Alternatively, the computer 10 may execute a process related to, for example, adjusting the operation of equipment associated with warehouse work based on the determined work plan.

### Accelerable work notification process executed by computer 10

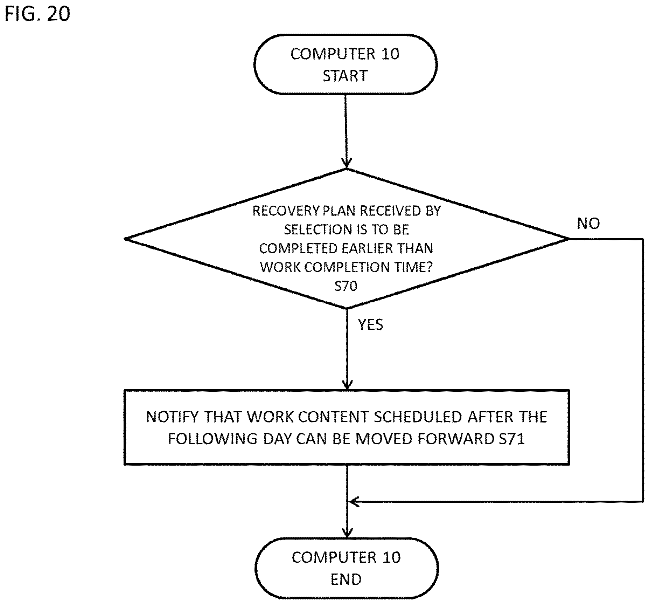

The accelerable work notification process executed by the computer 10 is explained below with reference to FIG. 20. FIG. 20 is a diagram showing the flowchart of the accelerable work notification process executed by the computer 10. The accelerable work notification relates to the above-mentioned work plan determination process, which is carried out after the above-mentioned Step S66.

The early completion judgement module judges whether or not the work completion time of the recovery plan received by selection is scheduled to be earlier than an ordinarily set work completion time on the day (Step S70).

The ordinarily set work completion time is the work completion time in the initial work plan or a previously set work completion time.

The early completion judgement module judges whether or not the cut time margin in the recovery plan received by selection is a positive time. In this case, the early completion judgement module does not need to consider the length of a positive cut time margin. However, the early completion judgement module preferably judges whether or not the cut time margin is positive enough to allow a predetermined work content to be carried out in the shipping order and the work plan after the following day.

If the early completion judgement module judges that the work completion time of the recovery plan received by selection is not scheduled to be earlier than an ordinarily set work completion time on the day (Step S70 NO), the computer 10 terminates the accelerable work notification process.

On the other hand, if the early completion judgement module judges that the work completion time of the recovery plan received by selection is scheduled to be completed earlier than an ordinarily set work completion time on the day (Step S70 YES), the accelerable work notification module notifies that the work content scheduled after the following day can be moved forward (Step S71).

The accelerable work notification module generates a notification indicating that the work content scheduled after the following day can be moved forward and transmits this notification to the administrator terminal 40 after selection.

The administrator terminal 40 receives the notification and displays this notification on its display unit.

The accelerable work notification module notifies that the work content scheduled after the following day can be moved forward by having the administrator terminal 40 display the notification.

By viewing the notification, an administrator will know that the work content scheduled after the following day can be moved forward. As the result, this leads an administrator to further change the work plan on the day.

In the above-mentioned explanation, the computer 10 judges whether or not the recovery plan received by selection is completed earlier than the work completion time. However, the computer 10 may also be configured to judge whether or not all the simulated recovery plans, not only the recovery plan received by selection, are completed earlier than the work completion time. In this case, the early completion judgement module judges whether or not the cut time margin in the simulated and calculated recovery plan is a positive time. The accelerable work notification module can be configured to include the identifier, etc., of the recovery plan with a positive cut margin in a notification indicating that the work content scheduled after the following day can be moved forward and output this notification to the administrator terminal 40.

The above is the accelerable work notification process.

The above-mentioned processes are described as separated processes, but the computer 10 can also be configured to execute some or all of these processes in combination. The computer 10 can also be configured to execute the processes at timings other than those described.

The computer (including CPU, an information processor, and various terminals) reads and executes a predetermined program to achieve the above-mentioned means and functions. For example, the program may be provided by a computer (SaaS: Software as a Service) through a network or a cloud service. The program may be provided in a form recorded in a computer-readable recording medium. In this case, the computer reads a program from the recording medium, and forwards it to an internal or external storage, records it in the storage, and executes it. The program may be previously recorded in a storage (recording medium) and provided from the storage to the computer through a communication line.

Embodiments of the present disclosure are described above, but the present disclosure is not limited thereto. Moreover, the effects described in Embodiments of the present disclosure are only the most suitable ones produced from the present disclosure. The effects of the present disclosure are not limited to those described in Embodiments of the present disclosure.
(1) A warehouse work management system that manages a work volume based on a worker and a shipping order in each process (e.g., receiving, binning, picking, distribution processing, packing, shipping) in a warehouse operation, including:
   an acquisition unit (e.g., acquisition unit 11, completion information acquisition module) that acquires completion information of each work process throughout a warehouse;
   a calculation unit (e.g., calculation unit 13, progress status calculation module) that compares the acquired completion information with a work process in a previously generated work plan and calculates a progress status of the work process;
   an alert notification unit (e.g., alert notification unit 12, alert notification module) that notifies an alert if the progress status of the work process is a threshold or less based on the calculation result;
   a generation unit (e.g., generation unit 14, recovery plan generation module) that generates a recovery plan in which a worker and/or a work content are/is changed, each time the alert is notified; and
   a simulator (e.g., simulator 15, simulation module, work efficiency calculation module) that simulates the generated recovery plan and calculates the work efficiency of the entire work on the day based on the recovery plan.
   The present disclosure of (1) enables to quickly correct a delay in progress caused by a trouble during a warehouse operation. The present disclosure of (1) also enables to recommend how to change the predicted worker plan and work plan to meet the shipping order and also enables to carry out a balance simulation at that time if the worker plan and the work plan that were predicted on the previous day is inconsistent with the current shipping order.
(2) The warehouse work management system according to (1), in which the generation unit generates a plurality of the recovery plans, and
   the simulator simulates a plurality of the recovery plans and calculates the work efficiency of the entire work on the day based on each of the recovery plans.
   The disclosure of (2) enables to simulate multiple recovery plans and understand the work efficiency of the entire work on the day based on each recovery plan.
(3) The warehouse work management system according to (2), further including: [0276]
   an output unit (e.g., recovery plan output module) that simultaneously outputs the plurality of the recovery plans simulated;
   a selection reception unit (e.g., a selection reception module) that receives selection for a plurality of the recovery plans output; and
   a determination unit (e.g., work plan determination module) that determines the recovery plan received by selection as the work plan after selection on the day.
   The disclosure of (3) enables to determine the work plan by using the recovery plan selected by an administrator among the generated recovery plans.
(4) The warehouse work management system according to (3), in which the output unit outputs a plurality of the recovery plans simulated, in optimal order of work efficiencies of the entire work on the day.
   The disclosure of (4) enables an administrator, etc., to easily understand an effective recovery plan in terms of work efficiency. A recovery plan with excellent work efficiency enables to prevent delay in work and deviation in progress.
(5) The warehouse work management system according to (3), in which the output unit outputs all recovery plans that complete a work process of the entire warehouse among a plurality of the recovery plans simulated.
   The disclosure of (5) enables an administrator to easily understand an effective recovery plan in terms of a work process.
(6) The warehouse work management system according to (3), further including an accelerable work notification unit (e.g., accelerable work notification module) notifies that the work content scheduled after the following day can be moved forward if the work completion time of the recovery plan received by selection is scheduled to be earlier than an ordinarily set work completion time on the day.
   The disclosure of (6) enables to move forward the work content scheduled after the following day to carry out.
(7) A warehouse work management method executed by a computer that manages a work volume based on a worker and a shipping order in each process in a warehouse operation, including the steps of:
   acquiring completion information of each work process throughout a warehouse (e.g., Step S40);
   comparing the acquired completion information with a work process in a previously generated work plan and calculating a progress status of the work process (e.g., Step S41);
   notifying an alert if the progress status of the work process is a threshold or less based on the calculation result (e.g., Step S44);
   generating a recovery plan in which a worker and/or a work content each time the alert is notified (e.g., Step S51); and
   simulating the generated recovery plan and calculating the work efficiency of the entire work on the day based on the recovery plan (e.g., Step S60, S62).
(8) A computer readable program causing a computer that manages a work volume based on a worker and a shipping order in each process in a warehouse operation to execute the steps of:
   acquiring completion information of each work process throughout a warehouse (e.g., Step S40);
   comparing the acquired completion information with a work process in a previously generated work plan and calculating a progress status of the work process (e.g., Step S41);
   notifying an alert if the progress status of the work process is a threshold or less based on the calculation result (e.g., Step S44);
   generating a recovery plan in which a worker and/or a work content each time the alert is notified (e.g., Step S51); and
   simulating the generated recovery plan and calculating the work efficiency of the entire work on the day based on the recovery plan (e.g., Step S60, S62).

### Description of reference numerals

1: warehouse work management system, 9: network, 10: computer, 20: WMS, 30: RCS, 40: administrator terminal, 50: shift management system, 60: calculation result, 61: progress table, 62: progress graph, 70: alert, 71: floor map, 71: progress status, 73: accepting order, 74: outline, 80, 86: change input Ul, 81: worker input field, 82: process input field, 83: time input field, 84: icon, 87: date field, 88: detail icon, 90: simulation result, [0300] 91: detail icon

## Claims

1. A warehouse work management system that manages a work volume based on a worker and a shipping order in each process in a warehouse operation, comprising:
an acquisition unit that acquires completion information of each work process throughout a warehouse;
a calculation unit that compares the acquired completion information with a work process in a previously generated work plan and calculates a progress status of the work process;
an alert notification unit that notifies an alert if the progress status of the work process is a threshold or less based on the calculation result;
a generation unit that generates a recovery plan in which a worker and/or a work content are/is changed, each time the alert is notified; and
a simulator that simulates the generated recovery plan and calculates the work efficiency of the entire work on the day based on the recovery plan.

2. The warehouse work management system according to claim 1, wherein the generation unit generates a plurality of the recovery plans, and
the simulator simulates a plurality of the recovery plans and calculates the work efficiency of the entire work on the day based on each of the recovery plans.

3. The warehouse work management system according to claim 2, further comprising: an output unit that simultaneously outputs the plurality of the recovery plans simulated;
a selection reception unit that receives selection for a plurality of the recovery plans output; and
a determination unit that determines the recovery plan received by selection as the work plan after selection on the day.

4. The warehouse work management system according to claim 3, wherein the output unit outputs a plurality of the recovery plans simulated, in optimal order of work efficiencies of the entire work on the day.

5. The warehouse work management system according to claim 3, wherein the output unit outputs all recovery plans that complete a work process of the entire warehouse on the day among a plurality of the recovery plans simulated.

6. The warehouse work management system according to claim 3, further comprising an accelerable work notification unit notifies that the work content scheduled after the following day can be moved forward if the work completion time of the recovery plan received by selection is scheduled to be earlier than an ordinarily set work completion time on the day.

7. A warehouse work management method executed by a computer that manages a work volume based on a worker and a shipping order in each process in a warehouse operation, including the steps of:
acquiring completion information of each work process throughout a warehouse;
comparing the acquired completion information with a work process in a previously generated work plan and calculating a progress status of the work process;
notifying an alert if the progress status of the work process is a threshold or less based on the calculation result;
generating a recovery plan in which a worker and/or a work content are/is changed, each time the alert is notified; and
simulating the generated recovery plan and calculating the work efficiency of the entire work on the day based on the recovery plan.

8. A computer readable program causing a computer that manages a work volume based on a worker and a shipping order in each process in a warehouse operation to execute the steps of:
acquiring completion information of each work process throughout a warehouse;
comparing the acquired completion information with a work process in a previously generated work plan and calculating a progress status of the work process;
notifying an alert if the progress status of the work process is a threshold or less based on the calculation result;
generating a recovery plan in which a worker and/or a work content are/is changed, each time the alert is notified; and
simulating the generated recovery plan and calculating the work efficiency of the entire work on the day based on the recovery plan.
